# EUROPEAN PATENT APPLICATION

(11) **EP 4 140 757 A1**
(43) Date of publication of application: **01.03.2023**
(21) Application number: 21205676.6
(22) Date of filing: 29.10.2021
(51) Int. Cl.: B41M 7/00

(54) **METHOD OF DECORATING WITH A COLOR OR PATTERN APPLIED ON AN AUTOMOBILE PART**

(30) Priority: 23.08.2021 CN 202110968370
(71) Applicant: Yanfeng Plastic Omnium Automotive Exterior Systems Co., Ltd., Shanghai 201805 (CN); Compagnie Plastic Omnium SE, 69007 Lyon (FR)
(72) Inventor: PAN, Dongqin, SHANGHAI, 201805 (CN); QUAN, Feifu, SHANGHAI, 201805 (CN)
(74) Representative: LLR

(57) **Abstract**

The invention provides a method of decorating with a color or pattern applied on an automobile part, comprising the following steps: A1: forming an injection molded part by means of an injection molding process; A2: printing ink on the injection molded part by using an ink printing process, so as to form an ink layer that has a color and/or pattern; and A3: spraying a transparent protective paint on the ink layer; so as to finally achieve the decoration of the automobile part with the color and/or pattern. In addition, the invention provides a method of decorating with a color or pattern applied on an automobile part, comprising the following steps: B1: forming an injection molded part by means of an injection molding process; B2: painting on the injection molded part to form a paint layer; B3: printing ink on the paint layer by using an ink printing process, so as to form an ink layer that has a color and/or pattern; and B4: spraying a transparent protective paint on the ink layer; so as to finally achieve the decoration of the automobile part with the color and/or pattern.

## Description

### Field of the Invention

The invention relates to the field of manufacture of automobile exterior parts, and more particularly, relates to a method of decorating with a color or pattern applied on an automobile part.

### Background of the Invention

At present, the color of injection-molded exterior parts of automobile is relatively monotonous. Painted parts generally have a single car body color, i.e., entirely in white or black, etc., or are partially masked and coated. In the meantime, traditional painting processes and masking processes cannot make texts and patterns clearly appear.

Existing conventional surface decorating techniques consist in coating, masking and coating, laser engraving or film pasting. However, automobile parts obtained after using those methods to decorate a surface generally cannot pass strict exterior tests, such as tests of light aging, chip resistance and condensed water. In addition, after recoating a varnish on a car body color by means of existing conventional surface decorating techniques, flame processing or plasma processing needs to be redone before recoating a base paint, color paint or varnish. Otherwise, there will be problems that the coating does not stick or delamination occurs, or exterior tests cannot be passed. Moreover, clear boundaries exist when using a film or decal, while using the laser engraving process can only achieve the decoration effect of a single color.

### Summary of the Invention

An objective of the invention is to provide a method of decorating with a color or pattern applied on an automobile part so as to solve the problem in the prior art that colorful texts and patterns that have a different color than the main color of a conventional monotonous painted part of automobile cannot be achieved by painting or injection molding its surface.

In order to solve the above-described problem, the invention adopts the following technical solutions:
According to a first aspect of the invention, a method of decorating with a color or pattern applied on an automobile part is provided, comprising the following steps: A1: forming an injection molded part by using an ink printing process, so as to form an ink layer that has a color and/or pattern; and A3: spraying a transparent protective paint on the ink layer; so as to finally achieve the decoration of the automobile part with the color and/or pattern.

Preferably, the ink printing process used in the step A2 is chosen from screen printing, pad printing, airbrushing, inkjet printing and transfer printing.

Preferably, the ink layer formed by airbrushing or inkjet painting in the step A2 is of a single layer, while the ink layer formed by screen painting, pad printing or transfer printing in the step A2 is of multiple layers.

Preferably, the ink printing process used in the step A2 consists in fixing the injection molded part to a corresponding printing device, using a fixture that matches the printing device and has a text or pattern, and printing ink onto the injection molded part by automatic or semi-automatic operation of the printing device. Preferably, the ink layer formed in the step A2 has a thickness of 6∼10 µm.

Preferably, the protective paint in the step A3 is a varnish that is a heat curing varnish or light curing varnish.

Preferably, in the step A3, the varnish sprayed forms a varnish filmhaving a thickness of 20∼40 µm.

According to a second aspect of the invention, a method of decorating with a color or pattern applied on an automobile part is provided, comprising the following steps: B1: forming an injection molded part by means of an injection molding process; B2: painting on the injection molded part to form a paint layer; B3: printing ink on the paint layer by using an ink printing process, so as to form an ink layer that has a color and/or pattern; and B4: spraying a transparent protective paint on the ink layer; so as to finally achieve the decoration of the automobile part with the color and/or pattern.

Preferably, the ink printing process used in the step B3 is chosen from screen printing, pad printing, airbrushing, inkjet printing and transfer printing.

Preferably, the ink layer formed by airbrushing or inkjet painting in the step B3 is of a single layer, while the ink layer formed by screen painting, pad printing or transfer printing in the step B3 is of multiple layers.

Preferably, the ink printing process used in the step B3 consists in fixing the injection molded part to a corresponding printing device, using a fixture that matches the printing device and has a text or pattern, and printing ink onto the paint layer by automatic or semi-automatic operation of the printing device.

Preferably, the step B2 comprises: sequentially spraying a base paint, a color paint and a varnish on the injection molded part, and then baking it at 85∼90°C for 30∼40 minutes.

Preferably, the ink layer formed in the step B3 has a thickness of 6∼10 µm.

Preferably, the step B4 comprises: spraying a varnish on the entire surface of the injection molded part, the varnish sprayed forming a varnish film having a thickness of 5∼55 µm.

Preferably, the step B4 comprises: spraying a transparent base paint on the entire surface of the injection molded part, and then spraying a varnish, the transparent base paint sprayed forming a transparent base paint film having a thickness of 5∼15 µm and the varnish sprayed forming a varnish film having a thickness of 20∼40 µm.

It should be understood that, as the invention uses a screen printing, pad printing, airbrushing, inkjet printing or transfer printing process to print ink on an injection molded part or a painted part, various patterns, texts and colors other than the color of an automobile's body can be included, so that an automobile part is provided with the effects of a colorful appearance and customized services for a customer may even be achieved.

As stated in the section of "Background of the Invention", existing conventional surface decorating techniques consist in coating, masking and coating, laser engraving or film pasting. However, automobile parts obtained after using those methods to decorate a surface cannot pass strict exterior tests. In addition, after recoating a varnish on an automobile's body color by means of existing conventional surface decorating techniques, flame processing or plasma processing needs to be redone before recoating a base paint, color paint or varnish. Otherwise, there will be problems that the coating does not stick or delamination occurs, or exterior tests cannot be passed.

However, such a method of decorating with a color or pattern provided by the invention, for the first time, creatively uses a screen painting, pad printing, airbrushing, inkjet painting or transfer printing process to print ink on an injection molded part or a painted part and then sprays a protective paint layer on the ink layer, allowing a solution of varied and colorful texts and patterns to be added to otherwise monotonous injection molded parts and painted parts of automobile while being able to meet the requirements of OEMs regarding quality and performance tests.

In sum, the method provided by the invention can achieve the effects of a varied, colorful and personalized appearance on traditional painted parts and injection molded parts of an automobile's body color, by means of a solution that combines techniques of decorating with a color or pattern with protective paint.

### Description of the Drawings

Figure 1 is a process flow chart of a method of decorating with a color or pattern applied on an injection molded part provided according to a preferred embodiment of the invention;
Figure 2 is a schematic structural view of an automobile part obtained by using the method shown in Figure 1;
Figure 3 is a process flow chart of a method of decorating with a color or pattern applied on a painted part provided according to another preferred embodiment of the invention;
Figure 4 is a schematic structural view of an automobile part obtained by using the method shown in Figure 3.

### Detailed Description of the Invention

The invention is further described below in connection with specific embodiments. It should be understood that the embodiments below are used merely for describing the invention and not for limiting the scope of the invention.

In the description of the invention, it should be understood that terms such as "central", "longitudinal", "transversal", "length", "width", "thickness", "upper", "lower", "front", "back", "left", "right", "vertical", "horizontal", "top", "bottom", "inner", "outer", "clockwise" and "counter-clockwise" indicate orientations or position relations based on the orientations and position relations shown in the accompanying drawings, which are merely used for facilitating the description of the invention and simplifying the description, and not for indicating or implying that the device or element referred to must have a specific orientation or be constructed or operated with a specific orientation, and therefore cannot be understood as limiting the invention.

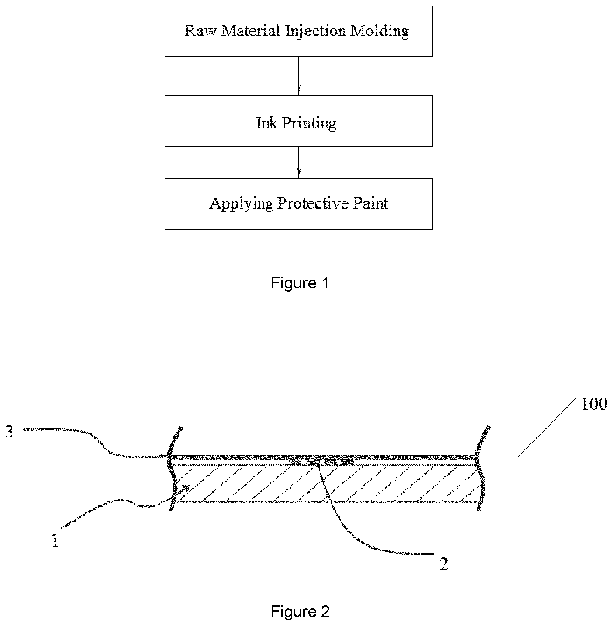

Figures 1 and 2 illustrate a method of decorating with a color or pattern applied on an injection molded part provided according to a preferred embodiment of the invention and an automobile part 100 obtained by the method, the method comprising the following steps:
- A1: forming an injection molded part 1 by means of an injection molding process;
- A2: printing ink on the injection molded part by means of a screen printing, pad printing, airbrushing, inkjet printing or transfer printing process, so as to form an ink layer 2 that has a color and/or pattern;
- A3: spraying a transparent protective paint 3 on the ink layer 2;
so as to finally achieve the decoration of the automobile part with the color and/or pattern.

In this embodiment, the ink printing process involved in the step A2 consists in fixing the injection molded part 1 to a corresponding printing device, using a fixture that matches the device and has a text or pattern, and printing ink onto the injection molded part 1 by automatic or semi-automatic operation of the device.

Preferably, the ink layer formed has a thickness of 6∼10 µm.

It should be understood that the ink layer 2 formed by airbrushing, inkjet painting is of a single layer, while the ink layer 2 formed by screen painting, pad printing, transfer printing is of multiple layers.

In the step A3, a varnish, which can be a heat curing varnish or a light curing varnish, is sprayed all over the entire surface of a product as the protective paint 3, the varnish film formed having a thickness of 20∼40 µm.

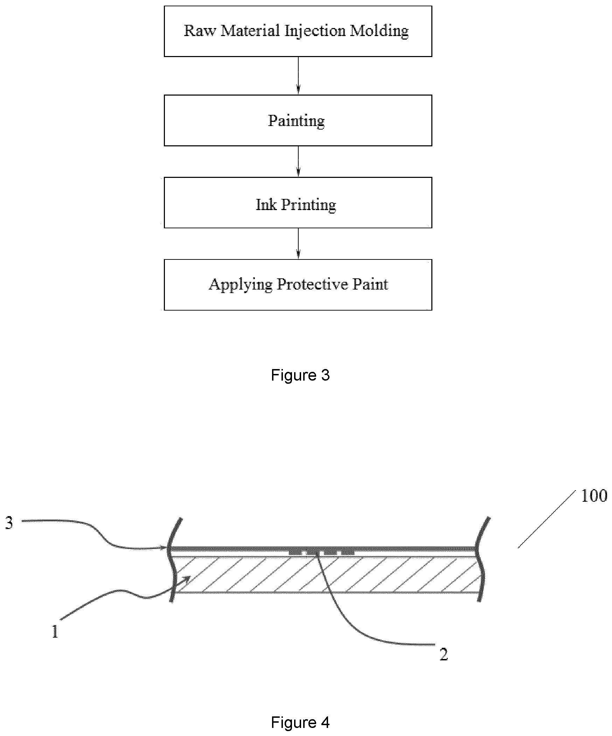

Figures 3 and 4 illustrate a method of decorating with a color or pattern applied on a painted part provided according to another preferred embodiment of the invention and an automobile part 200 obtained by the method, the method comprising the following steps:
- B1: forming an injection molded part 21 by means of an injection molding process;
- B2: painting on the injection molded part 21 to form a paint layer 22;
- B3: printing ink on the paint layer 22 by means of a screen printing, pad printing, airbrushing, inkjet printing or transfer printing process, so as to form an ink layer 23 that has a color and/or pattern;
- B4: spraying a transparent protective paint 24 on the ink layer 23;
so as to finally achieve the decoration of the automobile part with the color and/or pattern.

The step B2 comprises: sequentially spraying a base paint, a color paint and a varnish on the injection molded part, and then baking it at 85∼90°C for 30∼40 minutes.

The ink printing process involved in the step B3 consists in fixing the injection molded part 1 to a corresponding printing device, using a fixture that matches the device and has a text or pattern, and printing ink onto the paint layer 22 by automatic or semi-automatic operation of the device.

The ink layer 23 formed has a thickness of 6∼10 µm.

In this embodiment, the step B4 can comprise: spraying a varnish all over the entire painted surface as the protective paint 24, the varnish film formed having a thickness of 5∼55 µm.

Optionally, the step B4 can comprise: sequentially spraying a transparent base paint and a varnish all over the entire painted surface, the transparent base paint film having a thickness of 5∼15 µm and the varnish film having a thickness of 20∼40 µm.

It should be understood that the ink layer 23 formed by airbrushing, inkjet painting is of a single layer, while the ink layer 23 formed by screen painting, pad printing, transfer printing is of multiple layers.

What has been described are merely preferred embodiments of the invention and are not used for limiting the invention. Various modifications can be made to the above-described embodiments of the invention. Any simple, equivalent change and modification made according to the claims and description of the invention application shall all fall within the scope of protection of the claims of the invention patent. What has not been described in detail all belongs to conventional techniques.

## Claims

1. A method of decorating with a color or pattern applied on an automobile part, **characterized in that**, the method comprises the following steps:
- A1: forming an injection molded part by means of an injection molding process;
- A2: printing ink on the injection molded part by using an ink printing process, so as to form an ink layer that has a color and/or pattern; and
- A3: spraying a transparent protective paint on the ink layer;
so as to finally achieve the decoration of the automobile part with the color and/or pattern.

2. The method of the precedent claim, wherein the ink printing process used in the step A2 is chosen from screen printing, pad printing, airbrushing, inkjet printing and transfer printing.

3. The method of the precedent claim, wherein the ink layer formed by airbrushing or inkjet painting in the step A2 is of a single layer, while the ink layer formed by screen painting, pad printing or transfer printing in the step A2 is of multiple layers.

4. The method of any one of the precedent claims, wherein the ink printing process used in the step A2 consists in fixing the injection molded part to a corresponding printing device, using a fixture that matches the printing device and has a text or pattern, and printing ink onto the injection molded part by automatic or semi-automatic operation of the printing device.

5. The method of any one of the precedent claims, wherein the ink layer formed in the step A2 has a thickness of 6∼10 µm.

6. The method of any one of the precedent claims, wherein the protective paint in the step A3 is a varnish, the varnish being a heat curing varnish or light curing varnish.

7. The method of the precedent claim, wherein in the step A3, the varnish sprayed forms a varnish film having a thickness of 20∼40 µm.

8. A method of decorating with a color or pattern applied on an automobile part, **characterized in that**, the method comprises the following steps:
- B1: forming an injection molded part by means of an injection molding process;
- B2: painting on the injection molded part to form a paint layer;
- B3: printing ink on the paint layer by using an ink printing process, so as to form an ink layer that has a color and/or pattern; and
- B4: spraying a transparent protective paint on the ink layer;
so as to finally achieve the decoration of the automobile part with the color and/or pattern.

9. The method of claim 8, wherein the ink printing process used in the step B3 is chosen from screen printing, pad printing, airbrushing, inkjet printing and transfer printing.

10. The method of claim 9, wherein the ink layer formed by airbrushing or inkjet painting in the step B3 is of a single layer, while the ink layer formed by screen painting, pad printing or transfer printing in the step B3 is of multiple layers.

11. The method of any one of claims 8-10, wherein the ink printing process used in the step B3 consists in fixing the injection molded part to a corresponding printing device, using a fixture that matches the printing device and has a text or pattern, and printing ink onto the paint layer by automatic or semi-automatic operation of the printing device.

12. The method of any one of claims 8-11, wherein the step B2 comprises: sequentially spraying a base paint, a color paint and a varnish on the injection molded part, and then baking it at 85∼90°C for 30∼40 minutes.

13. The method of any one of claims 8-12, wherein the ink layer formed in the step B3 has a thickness of 6∼10 µm.

14. The method of any one of claims 8-13, wherein the step B4 comprises: spraying a varnish on the entire surface of the injection molded part, the varnish sprayed forming a varnish film having a thickness of 5∼55 µm.

15. The method of any one of claims 8-13, wherein the step B4 comprises: spraying a transparent base paint on the entire surface of the injection molded part, and then spraying a varnish, the transparent base paint sprayed forming a transparent base paint film having a thickness of 5∼15 µm, and the varnish sprayed forming a varnish film having a thickness of 20∼40 µm.
